# EUROPEAN PATENT SPECIFICATION

(11) **EP 1 509 077 B1**
(45) Date of publication and mention of the grant of the patent: **30.08.2006**
(21) Application number: 03725522.1
(22) Date of filing: 21.05.2003
(51) Int. Cl.: A01G 27/04

(54) **CONTAINER FOR IRRIGATION BY CAPILLARITY**
BEHÄLTER ZUR KAPILLAREN BEWÄSSERUNG
RECIPIENT D'IRRIGATION PAR CAPILLARITE

(30) Priority: 22.05.2002 ES 200201168
(43) Date of publication of application: 02.03.2005
(73) Proprietor: RIEGO DOMESTICO, S.L., 03203 Elx (ES)
(72) Inventor: LOZANO TERUEL, José Antonio, 03203 Elx (ES); MARTINEZ RIVAS, Joaquín, 03203 Elx (ES); MARTINEZ RIVAS, Alberto, 03203 Elx (ES)
(74) Representative: Ponti Sales, Adelaida
(86) International application number: PCT/IB2003/002178
(87) International publication number: WO 2003/096796

(56) References cited:
- WO-A-98/53668
- DE-A- 2 447 230
- FR-A- 2 088 860
- FR-A- 2 622 392
- GB-A- 1 230 271
- US-A- 3 758 987
- US-A- 3 786 598
- US-A- 4 819 375
- US-B1- 6 321 487

## Description

The present invention relates to a container for irrigation by capillarity, easy to manufacture and applicable to agricultural facilities and to household use, such as in window boxes or flowerpots supplied from a container.

### BACKGROUND OF THE INVENTION

There are today two known types of devices made of plastic materials used in drip irrigation systems.

A first known irrigation device is the one called 'micro conduct drip'. This is the most widely known and economical. In these devices, water circulates through micro passages that decrease water pressure until a predetermined dripping flow rate is reached. The flow rate is displayed externally in the device in litres per hour (calculated by the manufacturer), but this is simply used as a reference. This is due to the fact that said reference is initially different from what is displayed and, after a continued use, the stream decreases until it is totally obstructed because of carbonate depositions.

A second known device is the one called 'membrane drip'. This device is based on the principle that the pressure of the water supplied to the drip is annulled when the membrane, preferably made of rubber, is pressed, said membrane having a slot on its back side that allows only a reduced and predetermined quantity of water to flow through. These types of devices are removable for their cleaning.

However, and even though this device is more reliable than the first one, the results are similar due to the high hardness of irrigation water.

The main problem arising from the two types of devices described is that they do not provide a constant liquid flow rate. This is due to the fact that the limestone and magnesium depositions that settle on the micro passages do obstruct them totally or partially, whereby periodical cleaning is required, preferably with diluted nitric acid.

US 4819375 describes an upwardly open receptacle for plants that includes a bottom wall, a reservoir adjacent the receptacle and having an opening at the bottom in communication with a membrane in the bottom of the receptacle, and a compartment in operative relation with the reservoir.

### DESCRIPTION OF THE INVENTION

The object of the container for irrigation by capillarity of the present invention is to solve the problems of the devices known in the state of the art, while providing also other advantages that will be described below.

The container for irrigation by capillarity of the flow rate required by plants of the present invention comprises a synthetic tissue provided inside a support connected to the container for providing irrigation liquid to the soil, and means for controlling the vacuum degree of the upper part of the container, and it is characterised in that it is a bottle independent from the flowerpot or similar containing the soil and its lower part is placed onto the soil, and in that the irrigation tissue is a set of fibres.

Thanks to these features, a device for irrigation by capillarity is obtained which provides a constant and dosed irrigation liquid flow rate, regardless of supply pressures. A high hydrostatic pressure is avoided and the irrigation device works by capillarity. It also implies relatively low manufacturing costs, as compared to the drip systems used today, thus being appropriate for use in hydraulic distribution networks in agricultural exploitations and also for household purposes, such as in flowerpots or window boxes. Thanks to the fact that there is not just one single micro conduct, carbonates and similar depositions settle in the form of little individual, sandy-like particles along different points of the main passage, whereby the functioning of the whole system is not impeded, with the additional advantage that the depositions are partially eliminated though the continuous functioning of the device. Moreover, the sets of fibres are made of synthetic tissue in order to prevent putrefaction caused by microorganisms. In practice, it has been confirmed that, where drip irrigation supply pipes were used, every one of the drips of different types and models available on the market failed to operate properly and were totally or partially obstructed. This problem is solved with the new device according to the invention.

Preferably, the sets of fibres are in the form of wicks. This facilitates the creation of a capillary net.

Also preferably, the synthetic tissue is nylon. This material can be easily handled during its manufacture, a swelling being obtained as a result that increases very considerably its capillarity, whereby, for example, when putting one end into a glass of water, a constant, siphon-like dripping at a lower level is achieved until the glass is completely empty.

According to one embodiment of the invention, the wicks project from the rigid support between 0,5 cm and 10 cm, preferably between 1 cm and 2 cm. In this way, when the wicks are placed over the area to be irrigated, the absorption by the soil and by the roots improves their functioning. This does not happen with the devices previously described, which get obstructed with soil very easily.

Preferably, the wicks are fixed to the support by means of a pin or similar. Thus, in case of high pressures, the wicks arranged inside the cylinder can be fixed with a little pin that prevents them from being expelled due to pressure.

According to another aspect of the invention, the means for controlling the vacuum degree of the upper part of the container consist of a micro perforation with a diameter of between 0,3 mm and 1 mm, preferably of between 0,5 mm and 0,7 mm, located on the side of the container, above the connection level of the irrigation device. Thus, a vacuum degree is maintained that prevents liquid from flowing out through the micro perforation. This facilitates the slow intake of air in order to compensate the vacuum originated by the liquid output. Also, and even though the drip is kept full of water, there is no dripping unless it is placed onto a flowerpot, thus providing the flow rate needed by the culture medium.

According to a second embodiment of the invention, the means for controlling the vacuum degree of the upper part of the container consist of wicks of tissue similar to those used in irrigation devices. Said wicks are provided in the side area of the container, above the connection level of the irrigation device. Thus, calcareous obstructions are avoided and air circulates through the wick, whereby the hydrostatic pressure is minimum due to the proximity of the air outlet and inlet drip.

According to another embodiment of the invention, the means for controlling the vacuum degree of the upper part of the container consist of a conduct that runs through the container, the upper end of which is located above said container, the lower end of which is located at a level close to the level of connection of the irrigation device. In this way, air is made to reach a slightly upper level, thus achieving a minimum positive hydrostatic pressure that in some occasions can be negative.

Preferably, the lower end of the conduct that runs through the container is located below the connection level of the irrigation device and is provided in a lower projection of the container.

Alternatively, the irrigation container of the invention includes a connection to an irrigation liquid supply network and a vacuum control system. This facilitates working with greater volumes and containers.

According to another aspect of the invention, it includes an irrigation circuit that comprises containers, and is characterised in that it includes means for refilling the containers of the circuit when the level of liquid descends below a certain level.

Preferably, said means for refilling consist of floating buoys, valves or similar that maintain a small hydrostatic pressure in the outlet of the irrigation containers.

### BRIEF DESCRIPTION OF THE DRAWINGS

In order to facilitate the description of all that has been set out above, some drawings are attached in order to show, schematically and solely by way of non-restrictive example, some practical cases of embodiment of the container of irrigation by capillarity of the invention, in which:
Figure 1 is an elevation view of an assembling sequence of the wicks of synthetic tissue;
Figure 2 is a view of a first embodiment of the irrigation container;
Figure 3 is an elevation view of a second embodiment of the irrigation container;
Figure 4 is an elevation view of a third embodiment of the irrigation container;
Figure 5 is an elevation view of another embodiment of the irrigation container according to the invention and;
Figure 6 is an elevation view of an irrigation container that includes a connection to a supply network.

### DESCRIPTION OF A PREFERRED EMBODIMENT

The irrigation container by capillarity of the flow rate required by plants, such as by drip irrigation or similar, includes means for providing irrigation liquid to the soil by capillarity, said means being connected to the irrigation container. Said means for providing irrigation liquid to the soil include a set of fibres of synthetic tissue arranged inside a rigid support fixed to the irrigation container, thus obtaining an irrigation container by capillarity that provides a constant liquid flow rate.

The invention is based on the fact that there is not a high hydrostatic pressure being supplied to the devices, the pressure being actually very low, zero or even negative, whereby liquid flows out preferably by capillarity.

The device of the invention is applicable to agricultural exploitations and gardening.

The flow rates provided by the containers object of the invention depend upon the diameter of the drip, the type of fibre used and the number of capillary passages it has, since they supply the flow rate that each capillary conduct can provide.

The synthetic tissue consists of a wick, which, in association with capillarity, also acts as a plug, thereby only permitting circulation of water or nutrient liquids together with any additional fertilizers. This is performed at a considerably constant flow rate and is less affected by the differences in pressure coming from the network to which they are connected.

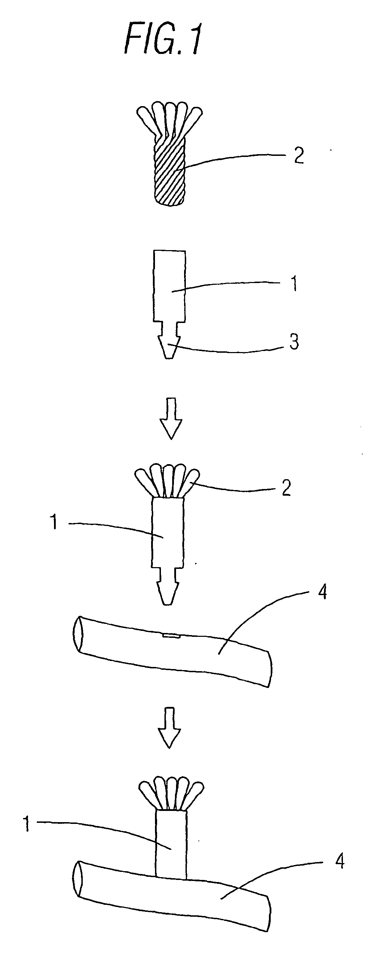

As can be appreciated in figure 1, the means for providing irrigation liquid to the soil comprise a little hollow device 1 of cylindrical, conical or similar shape, inside which a thread is provided in order to facilitate fixation of the wick 2. The device 1 can be extended by adding a hollow neck 3 that may be adapted to a conventional general distribution conduct 4 in an embodiment which does not form part of the present invention.

The capillary wicks 2 are arranged inside the cylindrical device, and they are firmly fixed to the base. In case of high pressures, the wicks 2 can be fixed with a pin that prevents them from being expelled due to pressure.

The wicks 2 used are preferably made of treated nylon, said nylon featuring a swelling that increases capillarity, whereby when placing one end into a glass of water at a lower level, a continuous dripping is achieved until the glass is completely empty. However, the wicks 2 can also be made of polyethylene and polyamide.

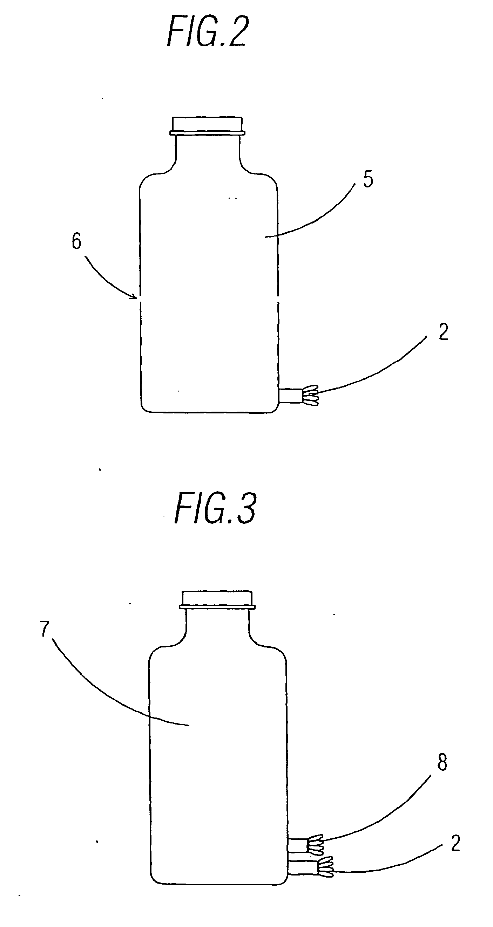

Figure 2 shows a first embodiment of the irrigation container 5, made of a plastic material, featuring a micro perforation 6 on its side with a diameter between 0,5-0,7 mm, located slightly above the connection level of the irrigation container. Thus, in order to prevent air from slowly flowing in to compensate the vacuum caused by the output of liquid, a certain vacuum degree is maintained so as not to let liquid flow out through the perforation. In the lower part of the container a wick 2 is shown.

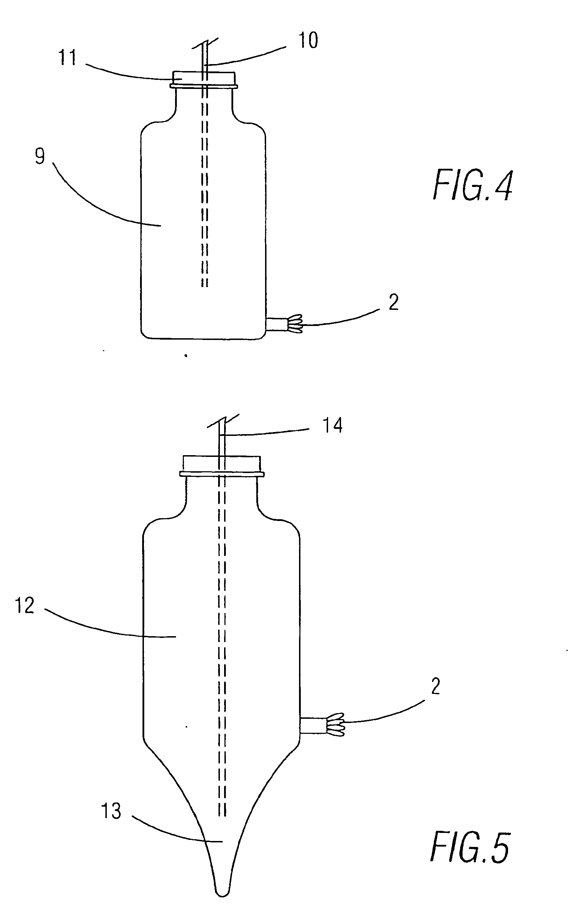

Figure 3 shows a second embodiment of an irrigation container 7. Instead of featuring a micro perforation, said container includes a little cylindrical tube 8 located slightly above the level of the wick 2. Said tube is also filled with nylon wick, thereby achieving the same effects as with the micro perforation 6. This embodiment is advantageous in that calcareous obstructions are avoided. In this case, air penetrates through the wick 8. Figure 4 shows a third embodiment of an irrigation container 9 featuring a conduct 10 for air intake located at a higher level than the level of the wick 2. Said conduct 10 can be of a plastic material and is introduced into the container through the plug 11. Since the conduct 10 is located above the level at which liquid is supplied, and since the lower part is located close to the outlet level of the container, a positive or negative hydrostatic pressure is achieved.

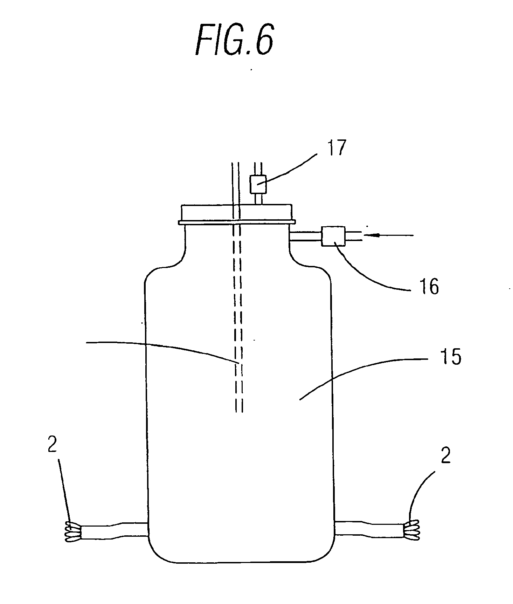

Figure 5 shows a fourth embodiment of an irrigation container 12 featuring an extension 13 in its lower part, whereby the lower end of the air conduct 14 lies below the wick 2 for liquid output.

Figure 6 shows a container 15 according to the invention for the use of sera in agriculture on an industrial scale, that is to say, using higher volumes and greater containers that comprise a conduct 16 connected to the supply network, said conduct including a small device 17 that permits air output. In the lower part of the container 15 a couple of wicks 2 are shown.

It should be pointed out that the drip of the invention can be used in agricultural facilities as well as in a household ambit, such as in flowerpots and window boxes.

In the case where it is used in flowerpots, the irrigation container by capillarity described in the invention maintains an optimum moisture degree of the soil, with no need of flooding it with water or eliminating the air, which is so necessary for the roots of plants. Besides, it has the advantage that liquid very rarely floods over the lower part of the flowerpots or window boxes. When this occurs, it is due to an inadequate composition of the cultivation soil and it is advisable to use the most suitable soil. The irrigation reservoir used in flowerpots can be placed on a plastic base of conical shape, on which the lower part of the container fits. Thus, when removing the bottle or container for being refilled, the support rests over the flowerpot, thereby avoiding the presence of moisture or soil on the bottom part of the container that can fall to the ground and soil it.

The plug, which can either be threaded or pushed though the upper part of the containers, permits liquid supply. When checking the containers, vacuum may be eliminated and even, if appropriate, it is possible to provide extra irrigation just by loosening the plug. The differences in consumption for each flowerpot are very variable, depending on the size of the flowerpot, the type and size of the plant and the season, whereby containers including the devices according to the invention must be provided in different sizes. Once the appropriate size has been conveniently chosen, the containers guarantee a continuous irrigation for several days or weeks with no need for refilling.

The appropriate composition of the cultivation soil, along with its texture, its content in peat and organic matter are essential in order to achieve an adequate moisture degree and to facilitate the development of plants. Normally, the soil for flowerpots available in commercial establishments is perfectly suitable for achieving an adequate water-air balance.

Independent of the object of this invention are the materials used for manufacturing the pieces that make up the container for irrigation by capillarity described, as well as the shapes and dimensions of the same and all accessory details that might be included, which can be replaced by others that are technically equivalent as long as they do not affect its essential nature or depart from the scope defined by the claims attached below.

## Claims

1. Container (5, 7, 9, 12) for irrigation by capillarity of the flow rate required by plants, comprising a synthetic tissue provided inside a support (1) connected to the container (5, '7, 9, 12) for providing irrigation liquid to the soil, and means for controlling the vacuum degree of the upper part of the container (5, 7, 9, 12), **characterised in that** it is a bottle independent from the flowerpot or similar containing the soil and its lower part is placed onto the soil, and **in that** the irrigation tissue is a set of fibres.

2. Container (5, 7, 9, 12) according to claim 1, **characterised in that** the sets of fibres are formed by wicks (2).

3. Container (5, 7, 9, 12) according to claim 1, **characterised in that** the synthetic tissue is nylon.

4. Container (5, 7, 9, 12) according to claim 2, **characterised in that** the wicks (2) project from the rigid support (1) between 0.5 cm and 10 cm, preferably between 1 cm and 2 cm.

5. Container (5, 7, 9, 12) according to claim 2, **characterised in that** the wicks (2) are fixed to the support (1) by means of a pin or similar.

6. Container (5, 7, 9, 12) according to claim 1, **characterised in that** the means for controlling the vacuum degree of the upper part of the container (5) consist of a micro perforation (6) with a diameter of between 0.3 mm and 1 mm, preferably between 0,5 mm and 0,7 mm, on the side area of the container (5), above the connection level of the synthetic tissue.

7. Container (5, 7, 9, 12) according to claim 1, **characterised in that** the means for controlling the vacuum degree of the upper part of the container (5) consist of wicks (2) of tissue similar to those used in the synthetic tissue, said wicks being provided in the side area of the container (5) above the connection level of the synthetic tissue.

8. Container (5, 7, 9, 12) according to claim 1, **characterised in that** the means for controlling the vacuum degree of the upper part of the container (9) consist of a conduct (10) running through the container (9), the upper end of which projects from said container and the lower end of which is close to the connection level of the synthetic tissue.

9. Container (5, 7, 9, 12) according to claim 8, **characterised in that** the lower end of the conduct (14) running through the container is located below the connection level of the synthetic tissue and is provided in a lower projection (13) of the container (12).

10. Container (5, 7, 9, 12) according to claim 1, **characterised in that** it includes a connection to an irrigation liquid supply network and a vacuum control system.

11. Irrigation circuit that includes containers, according to claim 9, **characterised in that** it includes means for refilling the containers of the circuit when the level of liquid descends below a certain level.

12. Circuit, according to claim 11, **characterised in that** the means for refilling consist of floating buoys, valves or similar.

## Patentansprüche

1. Behälter (5, 7, 9, 12) zum Bewässern mittels Kapillarität der Flussrate, die von Pflanzen benötigt wird, mit einem synthetischen Gewebe, das in einem Träger (1) vorgesehen ist, verbunden mit dem Behälter (5, 7, 9, 12) zum Liefern der Bewässerungsflüssigkeit an den Boden, und mit einer Einrichtung zum Steuern des Vakuumgrades des oberen Abschnitts des Behälters (5, 7, 9, 12), **dadurch gekennzeichnet, dass** er eine Flasche ist, unabhängig von dem Blumentopf oder einem ähnlichen Behältnis, das die Erde enthält und deren unterer Abschnitt auf die Erde gesetzt ist, und dass das Bewässerungsgewebe ein Satz von Fasern ist.

2. Behälter (5, 7, 9, 12) nach Anspruch 1, **dadurch gekennzeichnet, dass** der Satz von Fasern aus Dochten (2) gebildet ist.

3. Behälter (5, 7, 9, 12) nach Anspruch 1, **dadurch gekennzeichnet, dass** das synthetische Gewebe Nylon ist.

4. Behälter (5, 7, 9, 12) nach Anspruch 2, **dadurch gekennzeichnet, dass** die Dochte (2) von dem starren Träger (1) zwischen 0,5 cm und 10 cm, vorzugsweise zwischen 1 cm und 2 cm hervorstehen

5. Behälter (5, 7, 9, 12) nach Anspruch 2, **dadurch gekennzeichnet, dass** die Dochte (2) an dem Träger (1) mittels eines Zapfens oder dergleichen befestigt sind.

6. Behälter (5, 7, 9, 12) nach Anspruch 1, **dadurch gekennzeichnet, dass** die Einrichtung zum Steuern des Vakuumgrades des oberen Abschnitts des Behälters (5) aus einer Mikroperforation (6) besteht, mit einem Durchmesser zwischen 03 mm und 1 mm, vorzugsweise zwischen 0,5 mm und 0,7 mm an dem Seitenbereich des Behälters (5) oberhalb des Verbindungsniveaus des synthetischen Gewebes.

7. Behälter (5, 7, 9, 12) nach Anspruch 1, **dadurch gekennzeichnet, dass** die Einrichtung zum Steuern des Vakuumgrades des oberen Abschnitts des Behälters (5) aus Dochten (2) von Gewebe besteht, dass ähnlich zu jenem ist, das in dem synthetischen Gewebe verwendet wird, wobei die Dochte in dem Seitenbereich des Behälters (5) oberhalb des Verbindungsniveaus des synthetischen Gewebes vorgesehen sind.

8. Behälter (5, 7, 9, 12) nach Anspruch 1, **dadurch gekennzeichnet, dass** die Einrichtung zum Steuern des Vakuumgrades des oberen Abschnitts des Behälters (9) aus einer Leitung (10) besteht, die sich durch den Behälter (9) erstreckt, wobei deren oberes Ende aus dem Behälter heraus vorspringt und deren unteres Ende sich in der Nähe des Verbindungsniveaus des synthetischen Gewebes befindet.

9. Behälter (5, 7, 9, 12) nach Anspruch 8, **dadurch gekennzeichnet, dass** das untere Ende der Leitung (14), die sich durch den Behälter erstreckt, unterhalb des Verbindungsniveaus des synthetischen Gewebes angeordnet ist, und in einem unteren Vorsprung (13) des Behälters (12) vorgesehen ist.

10. Behälter (5, 7, 9, 12) nach Anspruch 1, **dadurch gekennzeichnet, dass** er eine Verbindung zu einem Bewässerungsflüssigkeitsversorgungsnetzwerk und einem Vakuumsteuerungssystem umfasst.

11. Bewässerungskreislauf, der Behälter nach Anspruch 9 umfasst, **dadurch gekennzeichnet, dass** er Einrichtungen zum Wiederbefüllen der Behälter des Kreislaufs umfasst, wenn das Niveau der Flüssigkeit unter ein bestimmtes Niveau fällt.

12. Kreislauf nach Anspruch 11, **dadurch gekennzeichnet, dass** die Einrichtung zum Wiederbefüllen aus schwimmenden Schwimmkörpern, Ventilen oder dergleichen besteht.

## Revendications

1. Récipient (5, 7, 9, 12) pour l'irrigation par capillarité avec un débit requis pour des plantes, comprenant un tissu synthétique disposé à l'intérieur d'un support (1) relié au récipient (5, 7, 9, 12) afin de permettre l'irrigation de la terre et un moyen de contrôle du niveau de vide de la partie supérieure du récipient (5, 7, 9, 12), **caractérisé en ce qu'**il s'agit d'une bouteille indépendante du pot de fleurs ou autre contenant la terre et sa partie inférieure est placée sur la terre et **en ce que** le tissu d'irrigation est un ensemble de fibres.

2. Récipient (5, 7, 9, 12) selon la revendication 1, **caractérisé en ce que** les ensembles de fibres sont constitués de mèches (2).

3. Récipient (5, 7, 9, 12) selon la revendication 1, **caractérisé en ce que** le tissu synthétique est du nylon.

4. Récipient (5, 7, 9, 12) selon la revendication 2, **caractérisé en ce que** les mèches (2) dépassent du support rigide (1) de 0,5 cm à 10 cm, de préférence de 1cm à 2cm.

5. Récipient (5, 7, 9, 12) selon la revendication 2, **caractérisé en ce que** les mèches (2) sont fixées au support (1) à l'aide d'une broche ou autre.

6. Récipient (5, 7, 9, 12) selon la revendication 1, **caractérisé en ce que** le moyen de contrôle du niveau de vide dans la partie supérieure du récipient (5) est constitué d'une micro perforation (6) d'un diamètre entre 0,3 mm et 1 mm, de préférence entre 0,5 mm et 0,7 mm, sur le côté du récipient (5), au-dessus du niveau de connexion du dispositif d'irrigation.

7. Récipient (5, 7, 9, 12) selon la revendication 1, **caractérisé en ce que** le moyen de contrôle du niveau de vide dans la partie supérieure du récipient (5) est constitué de mèches (2) de tissu similaires à celles utilisées dans les dispositifs d'irrigation, lesdites mèches étant disposées sur le côté du récipient (5), au-dessus du niveau de connexion du dispositif d'irrigation.

8. Récipient (5, 7, 9, 12) selon la revendication 1, **caractérisé en ce que** le moyen de contrôle du niveau de vide dans la partie supérieure du récipient (9) est constitué d'une conduite (10) qui s'étend à travers le récipient (9), dont l'extrémité supérieure dépasse dudit récipient et dont l'extrémité inférieure se trouve à proximité du niveau de connexion du dispositif d'irrigation.

9. Récipient (5, 7, 9, 12) selon la revendication 8, **caractérisé en ce que** l'extrémité inférieure de la conduite (14) qui s'étend à travers le récipient se trouve en dessous du niveau de connexion du dispositif d'irrigation et est disposée dans une saillie inférieure (13) du récipient (12).

10. Récipient (5, 7, 9, 12) selon la revendication 1, **caractérisé en ce qu'**il comprend une connexion à un réseau d'alimentation de liquide d'irrigation et un système de contrôle du vide.

11. Circuit d'irrigation qui comprend des récipients, selon la revendication 9, **caractérisé en ce qu'**il comprend un moyen de remplissage des récipients du circuit lorsque le niveau de liquide descend en dessous d'un niveau déterminé.

12. Circuit selon la revendication 11, **caractérisé en ce que** le moyen de remplissage est constitué de flotteurs, de soupapes ou autres.
